# EUROPEAN PATENT SPECIFICATION

(11) **EP 3 617 889 B1**
(45) Date of publication and mention of the grant of the patent: **11.08.2021**
(21) Application number: 17916409.0
(22) Date of filing: 27.06.2017
(51) Int. Cl.: G06F 11/30, G06F 11/34, G06F 11/07, G06F 11/36

(54) **STUTTER DETECTION METHOD AND DEVICE**
VERFAHREN UND VORRICHTUNG ZUR ERKENNUNG VON STOTTERN
PROCÉDÉ ET DISPOSITIF DE DÉTECTION DE SACCADES

(43) Date of publication of application: 04.03.2020
(73) Proprietor: Huawei Technologies Co., Ltd., Longgang District Shenzhen, Guangdong 518129 (CN)
(72) Inventor: LIN, Zhenchao, Shenzhen Guangdong 518129 (CN); KAN, Bin, Shenzhen Guangdong 518129 (CN); DING, Chao, Shenzhen Guangdong 518129 (CN); XU, Shun, Shenzhen Guangdong 518129 (CN); LU, Dong, Shenzhen Guangdong 518129 (CN)
(74) Representative: Grünecker Patent- und Rechtsanwälte PartG mbB
(86) International application number: PCT/CN2017/090376
(87) International publication number: WO 2019/000233

(56) References cited:
- EP-A1- 2 434 401
- WO-A1-2017/096734
- CN-A- 103 473 345
- CN-A- 104 965 763
- CN-A- 105 824 705
- CN-A- 106 681 913
- KR-A- 20130 115 553
- US-A1- 2003 135 781
- US-A1- 2011 138 236

## Description

### TECHNICAL FIELD

Embodiments of this application relate to the field of communications technologies, and in particular, to a frame freezing detection method and apparatus.

### BACKGROUND

Currently, a user has an increasingly high requirement on fluency during running of an application in terminals such as a mobile phone, a wearable device, and a tablet computer. However, as increasingly more functions are implemented by the terminal, resources occupied by an application during running are becoming more fragmented. As a result, when the user uses the terminal, frame freezing occurs, and user experience is greatly affected.

CN103473345A discloses a method for estimating time length, including: obtaining the waiting time of a task to be executed and the execution time of executing the task to be executed in a distributed system.

CN106681913A discloses a system and method for applying jam positioning and relates to the field of network technology.

Generally, the terminal may monitor, by using a watchdog (Watchdog) mechanism or an application not responding (Application Not responding, ANR) mechanism, whether frame freezing occurs in the terminal. For example, if no response message is received from an application within a preset time, the terminal may notify the user that the current application does not respond, and the user may choose to continue waiting or forcibly close the application.

If the user chooses to forcibly close the application, all scenarios of the application that are being executed by the terminal are lost, and user experience is poor. If the user chooses to continue waiting, the terminal continues to stay on a frame freezing interface, or even the terminal breaks down, and user experience is poor.

### SUMMARY

Embodiments of this application provide a frame freezing detection method and apparatus, to detect a specific location in which frame freezing occurs during running of an application, so that a reason of frame freezing can be accurately determined, thereby reducing a probability of frame freezing or breakdown and improving user experience.

The present disclosure is disclosed according to the independent claims. The dependent claims recite advantageous embodiments of the present disclosure.

To achieve the foregoing objectives, the following technical solutions are used in the embodiments of this application.

According to a first aspect, an embodiment of this application provides a frame freezing detection method, including: when detecting a trigger operation for a target application, performing, by a terminal, a target task corresponding to the trigger operation; recording, by the terminal, first duration from generating the target task to starting to execute the target task, and second duration of executing the target task; and determining, by the terminal by comparing the first duration with a preset first reference value and comparing the second duration with a preset second reference value, said first and second reference values being obtained from a server, that a location in which frame freezing occurs is in a process of another task before the target task is executed or is in a process of executing the target task, wherein the determining unit is specifically configured to: when the first duration is greater than the first reference value, determine that the location in which the frame freezing occurs is in the process of another task before the target task is executed; and when the second duration is greater than the second reference value, determine that the location in which the frame freezing occurs is in the process of executing the target task.

It can be learned that the specific location in which the frame freezing occurs when the target task of the target application is run may be detected by obtaining the first duration in which the target task of the target application waits to be executed and the second duration of actually executing the target task. For example, the frame freezing occurs in the task execution process, or occurs in a process in which the task waits to be executed. In this way, performance of the terminal may be specifically optimized based on a specific location of the frame freezing, thereby reducing a probability that frame freezing or breakdown occurs in the terminal, and improving user experience.

In a possible design method, the determining, by the terminal by comparing the first duration with a preset first reference value and comparing the second duration with a preset second reference value, that a location in which frame freezing occurs is in a process of another task before the target task is executed or is in a process of executing the target task includes: when the first duration is greater than the first reference value, it indicates that the target task waits for a long time in a task queue of the target application, consequently the trigger operation performed by a user for the target application is not responded for a long time, and therefore the terminal may determine that the location in which the frame freezing occurs is in the process of another task before the target task is executed; and when the second duration is greater than the second reference value, it indicates that a long time is used for executing the target task by the terminal, consequently the trigger operation performed by a user for the target application is not responded for a long time, and therefore the terminal may determine that the location in which the frame freezing occurs is in the process of executing the target task.

In a possible design method, after the terminal determines that the location in which the frame freezing occurs is in the process of another task before the target task is executed, the method further includes: when detecting a trigger operation for the target application again, the terminal performs offload processing on at least one task that is located before a current target task and that is used as a sub-thread, to increase a processing speed of the target task, and avoid a case in which frame freezing occurs again in a same application scenario.

In a possible design method, after the terminal determines that the location in which the frame freezing occurs is in the process of another task before the target task is executed, the method further includes: when detecting a trigger operation for the target application again, the terminal uses, as a candidate target task that waits to be closed, at least one task that is located before a current target task; and when obtaining a candidate target task selected by a user, the terminal deletes the candidate target task selected by the user. In this way, the terminal does not need to execute the deleted candidate task, so that the target task corresponding to the trigger operation can move to a queue head of the task queue as soon as possible, thereby increasing a processing speed of the target task, and avoiding a case in which frame freezing occurs again in a same application scenario.

In a possible design method, after the terminal determines that the location in which the frame freezing occurs is in the process of another task before the target task is executed, the method further includes: when detecting a trigger operation again that is performed by a user for the target application, the terminal deletes all tasks generated for the current target application, and restarts the target application.

In a possible design method, after the terminal determines that the location in which the frame freezing occurs is in the process of executing the target task, the method further includes: when detecting a trigger operation again that is performed by the user for the target application, the terminal adds a running resource for executing the target task, to increase the processing speed of the target task in the task queue, and avoid the case in which frame freezing occurs again in the same application scenario.

In a possible design method, after the recording, by the terminal, first duration from generating the target task to starting to execute the target task, and second duration of executing the target task, the method further includes: sending, by the terminal, the first duration and the second duration to a server, where the server refreshes the first reference value and the second reference value based on the first duration and the second duration that are reported by the terminal.

In a possible design method, the method further includes: obtaining, by the terminal, a first reference value and a second reference value from the server, where the first reference value is used to indicate a median value of duration in which the target task waits to be executed, and the second reference value is used to indicate a median value of duration of executing the target task.

In a possible design method, after the determining that a location in which frame freezing occurs is in a process of another task before the target task is executed or is in a process of executing the target task, the method further includes: notifying, by the terminal in a display interface, the user that the location in which the frame freezing occurs is in the process of another task before the target task is executed or is in the process of executing the target task, so that the user knows a specific reason of the frame freezing, and prevents the user from mistakenly considering that the terminal is suspended at this time.

According to a second aspect, an embodiment of this application provides a frame freezing detection method, including: obtaining, by a server, first duration and second duration that are sent by a first terminal, where the first duration is used to indicate duration from a time at which the first terminal generates a target task to a time at which the first terminal starts to execute the target task, the second duration is used to indicate duration of executing the target task by the first terminal, and the target task is generated in response to a trigger operation for a target application; determining, by the server based on the first duration, a first reference value of waiting to execute the target task; determining, by the server based on the second duration, a second reference value of executing the target task; and sending, by the server, the first reference value and the second reference value to the first terminal in order to perform the frame freezing detection according to claim 1.

In a possible design method, the method further includes: obtaining, by a server, third duration and fourth duration that are sent by a second terminal, where the third duration is used to indicate duration from a time at which the second terminal generates a target task to a time at which the second terminal starts to execute the target task, the fourth duration is used to indicate duration of executing the target task by the second terminal, and the target task is generated in response to a trigger operation for the target application; updating, by the server, the first reference value based on the third duration; and updating, by the server, the second reference value based on the fourth duration.

In a possible design method, the method further includes: sending, by the server, the first reference value and the second reference value to the first terminal.

In a possible design method, after the sending, by the server, the first reference value and the second reference value to the first terminal, the method further includes: obtaining, by the server, fifth duration and sixth duration that are sent by the first terminal, where the fifth duration is used to indicate duration from a time at which the first terminal regenerates a target task to a time at which the first terminal starts to execute the target task, the second duration is used to indicate duration of re-executing the target task by the first terminal, and the target task is generated in response to a trigger operation for the target application; updating, by the server, the first reference value based on the fifth duration; and updating, by the server, the second reference value based on the sixth duration.

According to a third aspect, an embodiment of this application provides a terminal, including: an execution unit, configured to: when detecting a trigger operation for a target application, execute a target task corresponding to the trigger operation; a recording unit, configured to record first duration from generating the target task to starting to execute the target task, and second duration of executing the target task; and a determining unit, configured to determine, by comparing the first duration with a preset first reference value and comparing the second duration with a preset second reference value, said first and second reference values being obtained from a server, that a location in which frame freezing occurs is in a process of another task before the target task is executed or is in a process of executing the target task, wherein the determining unit is specifically configured to: when the first duration is greater than the first reference value, determine that the location in which the frame freezing occurs is in the process of another task before the target task is executed; and when the second duration is greater than the second reference value, determine that the location in which the frame freezing occurs is in the process of executing the target task.

In the embodiments of this application, a name of the terminal or the server imposes no limitation on the device. In actual implementation, these devices may have other names provided that functions of the devices are similar to those in the embodiments of this application, in other words, fall within the scope of the claims of this application and their equivalent technologies.

In addition, for technical effects brought by any design manner of the second aspect to the thirteenth aspect, refer to the technical effects brought by different design methods in the first aspect. Details are not described herein.

### BRIEF DESCRIPTION OF DRAWINGS

FIG. 1 is a schematic structural diagram 1 of a terminal according to an embodiment of this application;
FIG. 2 is a schematic architectural diagram of an Android operating system according to an embodiment of this application;
FIG. 3 is a schematic diagram 1 of an application scenario of a frame freezing detection method according to an embodiment of this application;
FIG. 4 is a schematic flowchart of a frame freezing detection method according to an embodiment of this application;
FIG. 5 is a schematic diagram 2 of an application scenario of a frame freezing detection method according to an embodiment of this application;
FIG. 6 is a schematic diagram 3 of an application scenario of a frame freezing detection method according to an embodiment of this application;
FIG. 7 is a schematic diagram 4 of an application scenario of a frame freezing detection method according to an embodiment of this application;
FIG. 8 is a schematic diagram 5 of an application scenario of a frame freezing detection method according to an embodiment of this application;
FIG. 9A and FIG. 9B are a schematic diagram 6 of an application scenario of a frame freezing detection method according to an embodiment of this application;
FIG. 10 is a schematic diagram 7 of an application scenario of a frame freezing detection method according to an embodiment of this application;
FIG. 11 is a schematic diagram 8 of an application scenario of a frame freezing detection method according to an embodiment of this application;
FIG. 12 is a schematic diagram 9 of an application scenario of a frame freezing detection method according to an embodiment of this application;
FIG. 13 is a schematic diagram 10 of an application scenario of a frame freezing detection method according to an embodiment of this application;
FIG. 14 is a schematic diagram 11 of an application scenario of a frame freezing detection method according to an embodiment of this application;
FIG. 15 is a schematic diagram 12 of an application scenario of a frame freezing detection method according to an embodiment of this application;
FIG. 16 is a schematic structural diagram 2 of a terminal according to an embodiment of this application;
FIG. 17 is a schematic structural diagram 1 of a server according to an embodiment of this application;
FIG. 18 is a schematic structural diagram 3 of a terminal according to an embodiment of this application; and
FIG. 19 is a schematic structural diagram 2 of a server according to an embodiment of this application.

### DESCRIPTION OF EMBODIMENTS

The following terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of the embodiments of this application, "a plurality of" means at least two, unless otherwise specified.

Embodiments of this application provide a frame freezing detection method. The frame freezing detection method may be applied to any terminal that can run an APP, for example, a mobile phone, a wearable device, an AR (augmented reality)/VR (virtual reality) device, a tablet computer, a notebook computer, a UMPC (ultra-mobile personal computer), a netbook, or a PDA (personal digital assistant). This is not limited in the embodiments of this application.

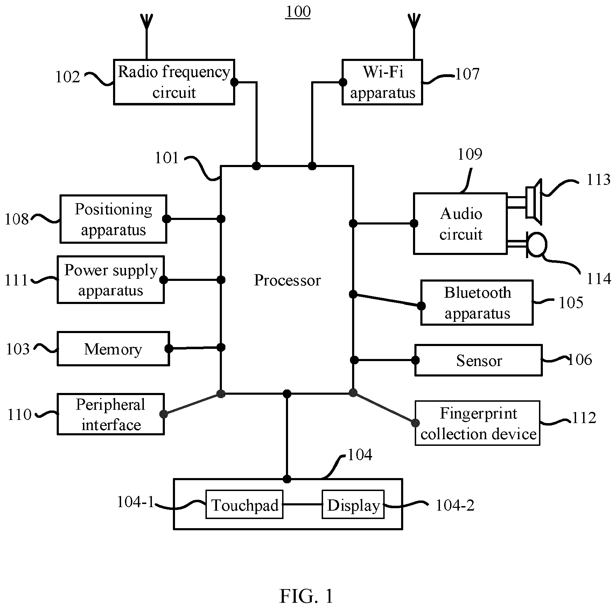

As shown in FIG. 1, a terminal in this embodiment of this application may be a mobile phone 100. The following describes this embodiment in detail by using the mobile phone 100 as an example. It should be understood that the mobile phone 100 shown in the figure is merely an example of the terminal, and the mobile phone 100 may have more or fewer components than those shown in the figure, or two or more components may be combined, or the mobile phone 100 may have different component configurations.

As shown in FIG. 1, the mobile phone 100 may specifically include components such as a processor 101, a radio frequency (RF) circuit 102, a memory 103, a touchscreen 104, a Bluetooth apparatus 105, one or more sensors 106, a Wi-Fi apparatus 107, a positioning apparatus 108, an audio circuit 109, a peripheral interface 110, and a power supply system 111. These components may communicate with each other by using one or more communications buses or signal lines (not shown in FIG. 1). A person skilled in the art may understand that a hardware structure shown in FIG. 1 does not constitute a limitation on the mobile phone, and the mobile phone 100 may include more or fewer components than those shown in the figure, or some components are combined, or the mobile phone 100 has different component arrangements.

The following describes the components of the mobile phone 100 in detail with reference to FIG. 1.

The processor 101 is a control center of the mobile phone 100. The processor 101 is connected to all parts of the mobile phone 100 by using various interfaces and lines, and executes various functions of the mobile phone 100 and performs data processing by running or performing an application (which may be referred to as App for short in the following) stored in the memory 103 and invoking data stored in the memory 103. In some embodiments, the processor 101 may include one or more processing units. For example, the processor 101 may be a Kirin 960 chip manufactured by Huawei Technologies Co., Ltd.

The radio frequency circuit 102 may be configured to receive and send information or receive and send a radio signal in a call process. Particularly, after receiving downlink data from a base station, the radio frequency circuit 102 may send the downlink data to the processor 101 for processing. In addition, the radio frequency circuit 102 sends related uplink data to the base station. The radio frequency circuit usually includes but is not limited to an antenna, at least one amplifier, a transceiver, a coupler, a low noise amplifier, a duplexer, and the like. In addition, the radio frequency circuit 102 may further communicate with another device through wireless communication. Any communications standard or protocol may be used for the wireless communication, including but not limited to a global system for mobile communications, a general packet radio service, code division multiple access, wideband code division multiple access, long term evolution, an email, a short message service, and the like.

The memory 103 is configured to store an application and data. The processor 101 runs the application and the data stored in the memory 103, to execute various functions of the mobile phone 100 and perform data processing. The memory 103 mainly includes a program storage area and a data storage area. The program storage area may store an operating system, and an application required by at least one function (for example, a sound playing function or an image playing function). The data storage area may store data (for example, audio data or a phone book) created based on use of the mobile phone 100. In addition, the memory 103 may include a high-speed random access memory, or may include a non-volatile memory such as a magnetic disk storage device, a flash memory device, or another volatile solid-state storage device. The memory 103 may store various operating systems such as the iOS operating system developed by Apple and the Android operating system developed by Google.

The touchscreen 104 may include a touchpad 104-1 and a display 104-2. The touchpad 104-1 may collect a touch event performed by a user of the mobile phone 100 on or near the touchpad 104-1 (for example, an operation performed by the user on the touchpad 104-1 or near the touchpad 104-1 by using any proper object such as a finger or a stylus), and send collected touch information to another component such as the processor 101. Although the touchpad 104-1 and the display screen 104-2 in FIG. 1 are used as two independent components to implement input and output functions of the mobile phone 100, in some embodiments, the touchpad 104-1 and the display screen 104-2 may be integrated to implement the input and output functions of the mobile phone 100. It may be understood that the touchscreen 104 is formed by stacking layers of materials. In this embodiment of this application, only the touchpad (layer) and the display screen (layer) are displayed, and another layer is not recorded in this embodiment of this application. In addition, in some other embodiments of this application, the touchpad 104-1 may cover the display 104-2, and a size of the touchpad 104-1 is greater than a size of the display screen 104-2, so that the display screen 104-2 is entirely covered by the touchpad 104-1. Alternatively, the touchpad 104-1 may be configured on a front face of the mobile phone 100 in a full panel form, in other words, any touch performed by the user on the front face of the mobile phone 100 can be sensed by the mobile phone. In this way, full touch experience on the front face of the mobile phone can be implemented. In some other embodiments, the touchpad 104-1 is configured on the front face of the mobile phone 100 in a full panel form, and the display screen 104-2 may also be configured on the front face of the mobile phone 100 in a full panel form. In this way, a bezel-less structure can be implemented on the front face of the mobile phone.

In this embodiment of this application, the mobile phone 100 may further have a fingerprint recognition function. For example, a fingerprint recognizer 112 may be configured on a back surface of the mobile phone 100 (for example, a lower part of a rear-facing camera), or a fingerprint recognizer 112 may be configured on the front face of the mobile phone 100 (for example, a lower part of the touchscreen 104). For another example, a fingerprint collection device 112 may be configured on the touchscreen 104 to implement a fingerprint recognition function. In other words, the fingerprint collection device 112 may be integrated with the touchscreen 104 to implement the fingerprint recognition function of the mobile phone 100. In this case, the fingerprint collection device 112 is configured on the touchscreen 104, and the fingerprint collection device 112 may be a part of the touchscreen 104. Alternatively, the fingerprint collection device 112 may be configured on the touchscreen 104 in another manner. A main component of the fingerprint collection device 112 in this embodiment of this application is a fingerprint sensor. The fingerprint sensor may use any type of sensing technology, including but not limited to an optical sensing technology, a capacitive sensing technology, a piezoelectric sensing technology, an ultrasonic sensing technology, or the like.

In this embodiment of this application, the mobile phone 100 may further include the Bluetooth apparatus 105, configured to implement data exchange between the mobile phone 100 and another terminal (for example, a mobile phone or a smartwatch) in a short distance from the mobile phone 100. In this embodiment of this application, the Bluetooth apparatus may be an integrated circuit, a Bluetooth chip, or the like.

The Wi-Fi apparatus 107 is configured to provide, for the mobile phone 100, network access that complies with a Wi-Fi-related standard protocol. The mobile phone 100 may access a Wi-Fi access point by using the Wi-Fi apparatus 107, to help the user receive and send an email, browse a web page, access streaming media, and the like. The Wi-Fi apparatus 107 provides a wireless broadband Internet access for the user. In some other embodiments, the Wi-Fi apparatus 107 may be used as a Wi-Fi wireless access point, and may provide Wi-Fi network access for another terminal.

The mobile phone 100 may further include at least one type of sensor 106, for example, a light sensor, a motion sensor, and another sensor. Specifically, the optical sensor may include an ambient light sensor and a proximity sensor. The ambient light sensor may adjust luminance of the display of the touchscreen 104 based on brightness of ambient light. The proximity sensor may turn off the display when the mobile phone 300 approaches an ear. As a type of motion sensor, an accelerometer sensor may detect values of acceleration in all directions (usually, three axes), may detect a value and a direction of gravity in a static mode, and may be used in an application for identifying a mobile phone posture (for example, screen switching between a landscape mode and a portrait mode, a related game, or magnetometer posture calibration), a function related to vibration identification (for example, a pedometer or a knock), and the like. Other sensors such as a gyroscope, a barometer, a hygrometer, a thermometer, and an infrared sensor may be further configured in the mobile phone 100. Details are not described herein.

The positioning apparatus 108 is configured to provide a geographic location for the mobile phone 100. It may be understood that the positioning apparatus 108 may be specifically a receiver of a positioning system such as a global positioning system (GPS), a BeiDou navigation satellite system, or a GLONASS developed by Russia. After receiving a geographic location sent by the positioning system, the positioning apparatus 108 sends the information to the processor 101 for processing, or sends the information to the memory 103 for storage. In some other embodiments, the positioning apparatus 108 may be further a receiver of an assisted global positioning system (AGPS). The AGPS system serves as an assisted server to assist the positioning apparatus 108 in completing ranging and positioning services. In this case, the assisted positioning server communicates with a positioning apparatus 108 (namely, the receiver of the GPS) of a terminal such as the mobile phone 100 through a wireless communications network, and provides positioning assistance. In some other embodiments, the positioning apparatus 108 may be a positioning technology based on a Wi-Fi access point. Each Wi-Fi access point has a globally unique MAC address, and the terminal can scan and collect a broadcast signal of a surrounding Wi-Fi access point when Wi-Fi is enabled. Therefore, the terminal can obtain a MAC address broadcast by the Wi-Fi access point. The terminal sends, to a location server through a wireless communications network, such data (for example, the MAC address) that can identify the Wi-Fi access point. The location server retrieves a geographic location of each Wi-Fi access point, obtains a geographic location of the terminal through calculation with reference to strength of the Wi-Fi broadcast signal, and sends the geographic location of each Wi-Fi access point to the positioning apparatus 108 of the terminal.

The audio circuit 109, a loudspeaker 113, and a microphone 114 may provide an audio interface between the user and the mobile phone 100. The audio circuit 109 may convert received audio data into an electrical signal, and transmit the electrical signal to the loudspeaker 113, and the loudspeaker 113 converts the electrical signal into a sound signal for outputting. In addition, the microphone 114 converts a collected sound signal into an electrical signal, and the audio circuit 109 receives the electrical signal, converts the electrical signal into audio data, and outputs the audio data to the RF circuit 102 to send the audio data to, for example, another mobile phone, or outputs the audio data to the memory 103 for further processing.

The peripheral interface 110 is configured to provide various interfaces for external input/output devices (for example, a keyboard, a mouse, a display externally connected to the mobile phone 100, an external memory, and a subscriber identity module card). For example, the mobile phone 100 is connected to the mouse by using a universal serial bus (USB) interface, and the mobile phone 100 is connected, by using a metal contact on a card slot of a subscriber identity module card, to the subscriber identity module (SIM) card provided by a telecommunications operator. The peripheral interface 110 may be configured to couple the external input/output peripheral device to the processor 101 and the memory 103.

The mobile phone 100 may further include the power supply apparatus 111 (for example, a battery and a power management chip) that supplies power to the components. The battery may be logically connected to the processor 101 by using the power management chip, so that functions such as charging management, discharging management, and power consumption management are implemented by using the power supply apparatus 111.

Although not shown in FIG. 1, the mobile phone 100 may further include a camera (a front-facing camera and/or a rear-facing camera), a camera flash, a micro projection apparatus, a near field communication (NFC) apparatus, and the like. Details are not described herein.

Further, the mobile phone 100 may run in an operating system such as the Android operating system or the iOS operating system. This is not limited in this embodiment of this application.

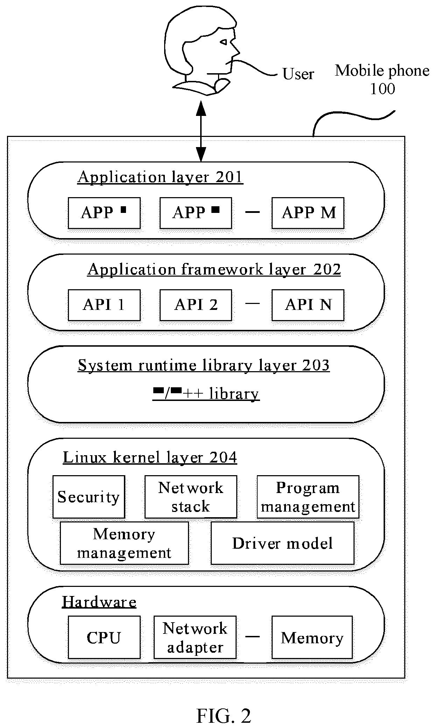

The Android operating system is used as an example. As shown in FIG. 2, the Android operating system may be divided into four layers: an application layer 201 (namely, an APP layer), an application framework layer 202 (namely, a Framework layer), a system runtime library layer 203 (namely, a Libraries layer), and a Linux kernel layer 204 that are arranged from a higher layer to a lower layer.

The Linux kernel layer 204 may be configured to control functions such as security (Security), memory management (Memory Management), program management (Process Management), network stack (Network Stack), and driver model (Driver Model) of the mobile phone 100. The Linux kernel layer 204 is also an abstraction layer between hardware (for example, a CPU, a network adapter, and a memory) and a software stack, and may hide specific hardware details, to provide a unified service for upper layers (the system runtime library layer 203, the application framework layer 202, and the application layer 201).

The system runtime library layer 203 includes some C/C++ libraries, for example, a media library, a system C library, and a display management library (Surface Manager). These libraries can be used by different components in the Android system, and the system runtime library layer 203 may provide services for the developer through the Framework layer 202.

The Framework layer 202 provides the developer with an API framework that can be used for fully accessing an application. Specifically, the Framework layer 202 provides a large quantity of APIs for developing an application, and an APP that meets a related service requirement may be constructed by invoking a corresponding API.

The application layer 201 mainly includes an APP that runs on a virtual machine and that is written in a Java language. A user interacts, by invoking a related API in the Framework layer 202, with the system running library layer 203 or the Linux kernel layer 204 on an operation interface of operating the APP, to implement a function corresponding to the operation interface.

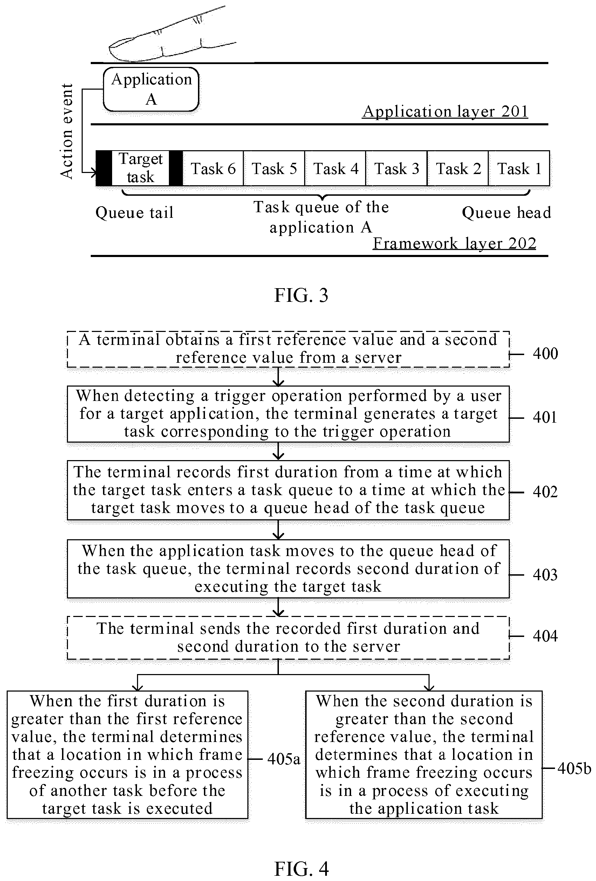

For example, as shown in FIG. 3, an application A is installed in an application layer 201 of a mobile phone 100. When the mobile phone 100 detects a trigger operation in which a user taps an icon of the application A on a desktop, the application A is triggered to invoke a corresponding API in a Framework layer 202 to generate an action event (ActionEvent). The action event indicates that the icon of the application A is tapped. Further, as shown in FIG. 3, one or more target tasks may be generated on the Framework layer 202 for processing the action event. For example, the tasks are starting a related component of the application A, loading an advertisement, and displaying home page content. After the target tasks are generated, the target tasks are sent to a task queue (task queue) of the application A to wait for processing.

Then, the mobile phone 100 executes each task in the task queue in sequence according to a first-in-first-out rule. After all tasks that are located before the target tasks in the task queue are executed, the target tasks move from a queue tail of the task queue to a queue head of the task queue. When the target tasks are located in the queue head of the task queue, the mobile phone 100 starts to execute the target tasks, to implement a startup process, of the application A, that is corresponding to the trigger operation in which the user taps the icon of the application A.

In the embodiments of this application, to determine a specific location in which frame freezing occurs during running of an application, the terminal may obtain, in advance, a reference value that is used to determine whether frame freezing occurs. For example, the reference value may include reference duration (namely, a first reference value) in which a task in a task queue waits to be executed, and reference duration (namely, a second reference value) in which a task is executed. For example, the first reference value is 10 ms, and the second reference value is 20 ms.

In this case, the terminal may monitor actual duration (namely, first duration) in which each task in the task queue waits to be executed in the task queue, and actual duration (namely, second duration) in which the task is executed. In this way, the terminal may determine, by comparing the first reference value with the first duration, whether frame freezing occurs when the task waits to be executed in the task queue. For example, when it is detected that the first duration is 15 ms (greater than the first reference value 10 ms), it may be determined that frame freezing occurs when the task waits to be executed in the task queue. Correspondingly, the terminal may determine, by comparing the second reference value with the second duration, whether frame freezing occurs in a process of actually executing the task. For example, when it is detected that the second duration is 25 ms (greater than the second reference value 20 ms), it may be determined that frame freezing occurs in the process of executing the task.

It can be learned that, according to the frame freezing detection method provided in the embodiments of this application, a specific location in which frame freezing occurs during running of an application may be detected by obtaining first duration in which each task that is generated during running of the application waits to be executed and second duration of actually executing the task. For example, the frame freezing occurs in the task execution process, or occurs in a process in which the task waits to be executed. In this way, performance of the terminal may be specifically optimized based on a specific location of frame freezing, thereby reducing a breakdown probability of the terminal, and improving user experience.

The following describes in detail a frame freezing detection method according to an embodiment of this application with reference to a specific embodiment. As shown in FIG. 4, the method includes the following steps.

400. A terminal obtains a first reference value and a second reference value from a server.

The first reference value may be specifically a median value, determined by the server, of duration in which a task generated for an application (for example, an application A) waits to be executed in a task queue and that is reported by each terminal. Correspondingly, the second reference value may be specifically a median value, determined by the server, of duration in which the task generated for the application (for example, the application A) is actually executed and that is reported by each terminal.

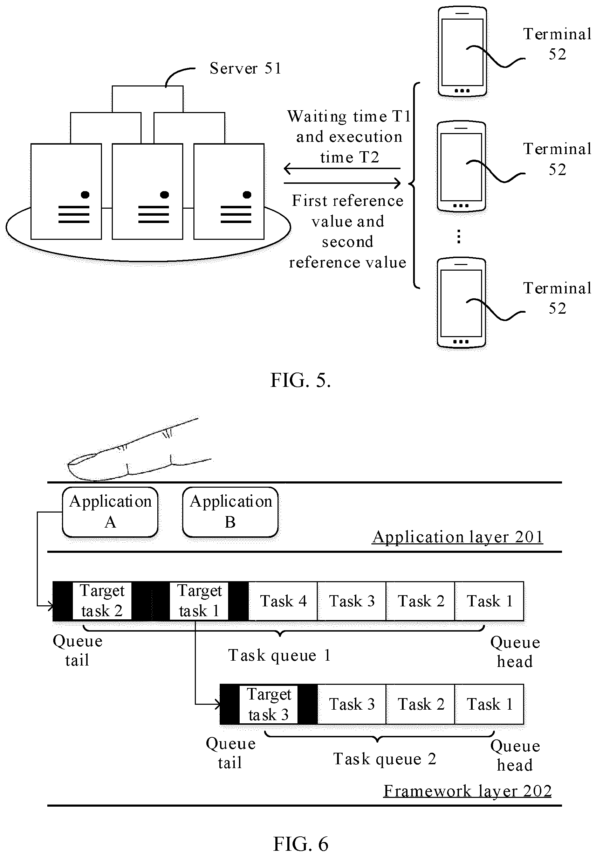

Specifically, as shown in FIG. 5, the frame freezing detection method provided in this embodiment of this application may be applied to a detection system shown in FIG. 5. The system includes a server 51 and N terminals 52 connected to the server 51.

For example, an application A is installed in each terminal 52 in the N terminals. Therefore, when running the application A, each terminal may record a waiting time T1 of each task that is generated for the application A in the task queue and an execution time T2 in which each task is executed, and further report the waiting time T1 and the execution time T2 of each task to the server 51. Certainly, the terminal may also send an identifier of each task and an identifier of the application A (for example, a package name of the application A) to the server.

Therefore, the server 51 may obtain waiting times T1 and execution times T2 of executing each task in different terminals 52. For each task, the server 51 may send, to each terminal 52, a median value, of all obtained waiting times T1 of the task, that is used as the first reference value, and send, to each terminal 52, a median value, of all obtained execution times T2 of the task, that is used as the second reference value. In this way, the terminal may obtain the first reference value and the second reference value corresponding to each task during execution of the application A.

Then, a task 1 of the application A is used as an example. After receiving a first reference value and a second reference value that are of the task 1 and that are sent by the server, the terminal 52 may determine, by using the first reference value as a reference, whether frame freezing occurs when the task 1 of the application A waits in the task queue, and may further determine, by using the second reference value as a reference, whether frame freezing occurs during execution of the task 1 of the application A, so as to determine a specific location in which frame freezing occurs in a running process of the task 1.

Certainly, the server 51 may also obtain, based on a waiting time T1 and an execution time T2 reported by each terminal 52, the first reference value and the second reference value by using a corresponding mathematic model or algorithm. This is not limited in this embodiment of this application.

For example, because terminals of different device types have different processing capabilities, the terminal 52 may further report a device type of the terminal 52 when reporting the waiting time T1 and the execution time T2. Different device types correspond to different weights of the waiting time T1 and the execution time T2. In this way, when calculating the first reference value and the second reference value, the server 51 may perform weighted averaging on the N waiting times T1 based on device information of each terminal to obtain the first reference value, and may perform weighted averaging on the N execution times T2 based on the device information of each terminal to obtain the second reference value. In this way, accuracy of subsequently determining a frame freezing location is improved.

It may be understood that the first reference value and the second reference value are a real-time update process. In other words, the server 51 may refresh the first reference value and the second reference value based on waiting times T1 and execution times T2 that are reported by different terminals 52 in real time, and send the refreshed first reference value and second reference value to the terminals 52.

401. When detecting a trigger operation performed by a user for a target application, the terminal generates a target task corresponding to the trigger operation.

As shown in FIG. 3, when the terminal detects the trigger operation performed by the user for the target application (for example, the application A), for example, the user taps a search key of a contact application, the application A may be triggered to invoke a corresponding API in the Framework layer 202 to generate an action event (ActionEvent). Then, one or more target tasks are generated on the Framework layer 202 for processing the action event. For example, the tasks are loading local contacts, a search task, and displaying a search result. After the target tasks are generated, the target tasks are sent to a task queue of the application A to wait for processing.

The target tasks may be specifically one or more message (message) objects. In the Android operating system, a parameter of a related event may be transmitted by using a message processing mechanism. Specifically, when an application is started, the terminal starts a main thread (namely, a UI thread) to manage a UI (interface) and listen to events such as a user tap. Therefore, when detecting a trigger operation performed by the user for the application A, the terminal may generate one or more corresponding message objects that are used as target tasks, and send the message objects to a message queue (namely, the task queue) in which the message objects wait to be executed. After the target task leaves the queue, the terminal may invoke a handleMessage() method of a handler object corresponding to the message objects to process the message objects, in other words, execute the target task.

It may be understood that a task in the task queue of the application A may also be associated with a task in a task queue of another application (for example, an application B). For example, the application A is a shopping application, and the application B is a payment application. When the user triggers a payment key in the application A, as shown in FIG. 6, a target task 1 of refreshing a payment page and a target task 2 of displaying a payment result are generated for the application A, and the task 1 and the task 2 are sent to a queue tail of a task queue 1 corresponding to the application A. In addition, generation of the target task 1 may trigger generation of a corresponding payment task such as a target task 3 for the application B. In this case, the application B sends the target task 3 to a queue tail of a task queue 2 corresponding to the application B to wait for processing. In this case, the target tasks include the target task 1 and the target task 2 of the application A and the target task 3 of the application B.

402. The terminal records first duration from a time at which the target task enters a task queue to a time at which the target task moves to a queue head of the task queue.

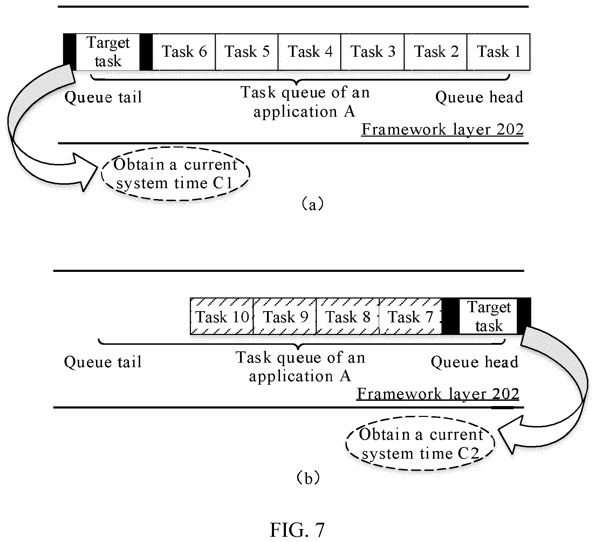

For example, after generating the target task corresponding to the trigger operation, the terminal adds the target task to a queue tail of a task queue of the target application. As shown in FIG. 7(a), there are six to-be-processed tasks: a task 1 to a task 6 before the target task in the task queue of the target application. When the target task is added to the queue tail of the task queue of the target application, the terminal may further invoke a function: getCurrentTime() to obtain a current system time C1. For example, the current system time C1 returned by getCurrentTime() is 21:10:10:25 ms in this case.

Then, the terminal may continue to execute each task in the task queue according to a first-in-first-out rule. As shown in FIG. 7(b), after the terminal executes the task 1 to the task 6 that are located before the target task in the task queue, the target task moves from the queue tail of the task queue to a queue head of the task queue. In this case, the terminal may invoke the function: getCurrentTime() again to obtain a current system time C2. For example, the current system time C2 returned by getCurrentTime() is 21:10:10:45 ms in this case.

Therefore, the terminal may determine, based on the two obtained system times, that the first duration from the time at which the target task enters the task queue to the time at which the target task moves to the queue head of the task queue is C2-C1=20 milliseconds. The first duration may reflect duration from generating the foregoing target task to starting to execute the target task.

403. When the target task moves to the queue head of the task queue, the terminal records second duration of executing the target task.

In step 403, when the target task moves to the queue head of the task queue, the terminal starts to execute the target task. After the target task is executed, the terminal returns, to the target application, a response message indicating that execution of the target task is completed. In this case, the terminal may be triggered to invoke the function: getCurrentTime() again to obtain a current system time C3. For example, the current system time C3 returned by getCurrentTime() is 21:10:11:01 ms in this case.

Therefore, the terminal may determine that the second duration of executing the target task is C3-C2=26 milliseconds.

404. The terminal sends the recorded first duration and second duration to the server.

Optionally, the terminal may further send, to the server, the obtained first duration that is used as the waiting time T1 in step 400 and the obtained second duration that is used as the execution time T2 in step 400, so that the server refreshes the first reference value and the second reference value, and sends the refreshed first reference value and second reference value to the terminal.

Then, the terminal may determine, by comparing the first duration with the first reference value and comparing the second duration with the second reference value, whether frame freezing occurs during running of the target task. If the frame freezing occurs, the terminal may further determine a specific location in which the frame freezing occurs.

Certainly, when sending the first duration and the second duration, the terminal may further add information such as a package name of the application to which the target task belongs and an identifier of the target task. In this way, the server may determine a corresponding first reference value and second reference value for different tasks of different applications based on a task of an application.

405a. When the first duration is greater than the first reference value, the terminal determines that the location in which the frame freezing occurs is in a process of another task before the target task is executed.

For example, the first duration is C2-C1=20 milliseconds, and the first reference value, of the target task, that is present by the server to the terminal is 10 milliseconds. In this case, the first duration is greater than the first reference value, and it indicates that the target task waits for a long time in the task queue of the target application. Consequently, the trigger operation performed by the user for the target application is not responded for a long time.

In this case, the terminal may determine that the frame freezing occurs because another task that is located before the target task in the task queue is processed for a long time, so that the terminal can accurately determine a specific reason of frame freezing during running of the target application.

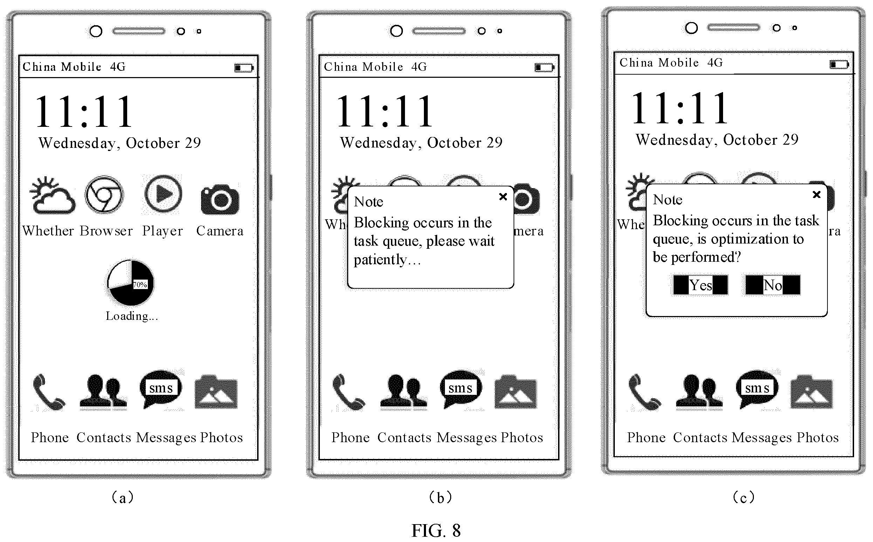

In addition, when the terminal detects that duration in which the target task waits in the task queue is greater than the first reference value and execution of the target task is not started, as shown in FIG. 8(a), the terminal may further notify, by using a notification box, the user that the terminal is processing the target task at present. For example, the terminal may calculate a waiting time of the user based on a quantity of to-be-processed tasks in the task queue at present, and notify the user of the waiting time, or calculate, based on the quantity of to-be-processed tasks in the task queue at present, current progress of completing the target task, and notify the user of the current progress.

Alternatively, as shown in FIG. 8(b), the terminal may further notify a specific reason of frame freezing to the user by using a notification box, and prompt the user to wait patiently, to avoid a case in which the user mistakenly considers that the terminal is suspended at this time.

Alternatively, as shown in FIG. 8(c), the terminal may further notify, by using a notification box, the user of whether to optimize the frame freezing. If the user confirms that the frame freezing needs to be optimized, the terminal may continue to perform a frame freezing optimization method provided in the following embodiment.

Specifically, to reduce a probability that frame freezing occurs again when the user subsequently performs the foregoing trigger operation again for the target application, the developer may obtain the first duration and the second duration by inserting a log (log) into running code of the application.

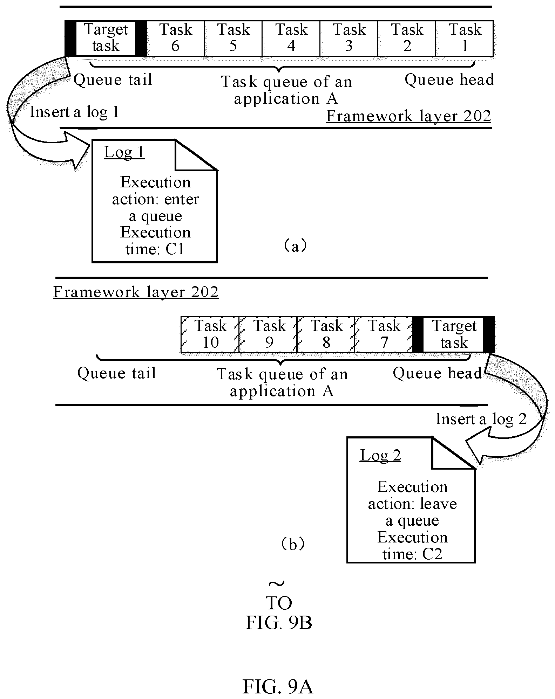

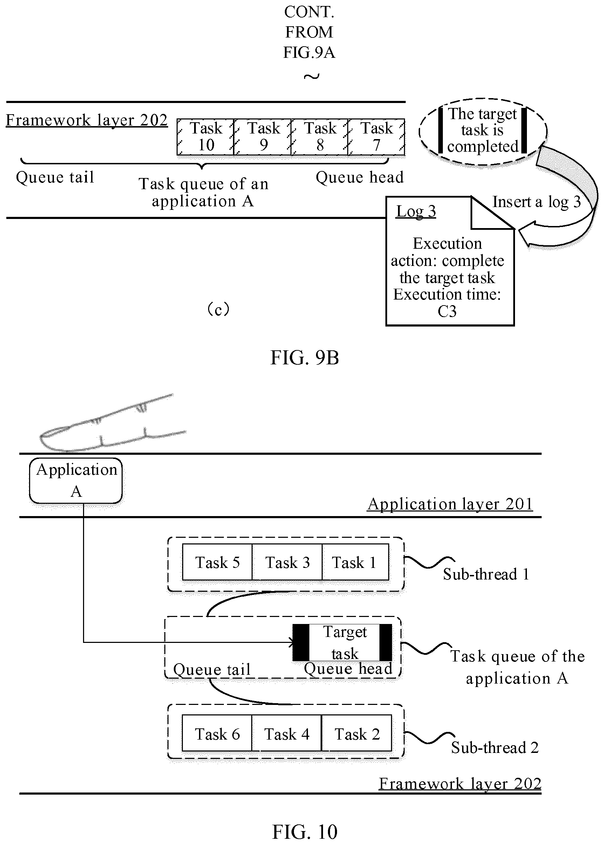

For example, as shown in FIG. 9(a), when the terminal adds the target task to the queue tail of the task queue of the target application, a log 1 may be inserted. The log 1 is used to record the system time C1 of the action of adding the target task to the queue tail of the task queue of the target application. As shown in FIG. 9(b), before the terminal starts to execute the target task, a log such as a log 2 may be inserted again. The log 2 is used to record the system time C2 at which execution of the target task is started. As shown in FIG. 9(c), after completing execution of the foregoing target task, the terminal may insert a log such as a log 3 again. The log 3 is used to record the system time C3 at which execution of the foregoing target task is completed.

In this way, the developer may determine, by printing the log 1 to log 3, the first duration C2-C1 from the time at which the target task enters the task queue to the time at which the target task moves to the queue head of the task queue, and the second duration C3-C2 in which the target task is executed. Further, the developer may determine, by comparing the first duration with the first reference value and comparing the second duration with the second reference value, a specific location in which the frame freezing occurs during running of the target task.

For example, when the first duration is greater than the first reference value, the developer may determine that a specific reason of the frame freezing is that another task that is located before the target task in the task queue is processed for a long time. Therefore, the developer may simplify running code of the task 1 to the task 6 that are located before the target task in FIG. 7(a), so that when the user subsequently performs a same trigger operation, execution efficiency of another task that is located before the target task in the task queue can be improved, thereby reducing frame freezing.

Certainly, after determining the first duration (C2-C1) and the second duration (C3-C2), the terminal may insert a log to record specific values of the first duration and the second duration. Specific content of the inserted log is not limited in this embodiment of this application.

In some embodiments of this application, the terminal determines that the frame freezing occurs when another task that is located before the target task in the task queue is being executed. Therefore, when the terminal detects again that the user performs the same trigger operation for the target application, for example, when the user taps again the search key of the contact application, the terminal also generates a target task (namely, a current target task) corresponding to the trigger operation. It may be understood that although a generation time of the current target task is different from a generation time of the latest target task in step 401, triggering scenarios are the same. Therefore, the current target task and the target task generated in step 401 have the same content, for example, both are contact search tasks.

In this case, the terminal may perform offload processing on at least one task that is located before the current target task in the task queue and that is used as a sub-thread. As shown in FIG. 10, when detecting again that the user performs the same trigger operation for the target application, the terminal may establish two sub-threads to process a task 1 to a task 6 that are located before the target task in the task queue. The sub-thread 1 is used to process the task 1, the task 3, and the task 5, and the sub-thread 2 is used to process the task 2, the task 4, and the task 6. Therefore, the target application responds to the foregoing trigger operation, and the generated target task is sent to the task queue. In this case, other tasks in the task queue are distributed to the sub-thread 1 and the sub-thread 2, and a main thread of the target application may immediately process the target task. In this way, a processing speed of the target task is increased, and a case in which frame freezing occurs again in a same application scenario is avoided.

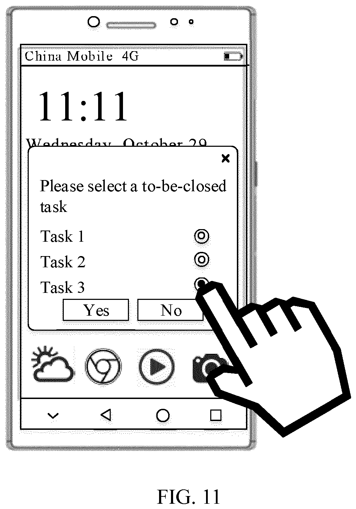

In some other embodiments of this application, when detecting again that the user performs the same trigger operation for the target application, because the terminal determines that the frame freezing occurs when another task that is located before the target task in the task queue is being executed, as shown in FIG. 11, the terminal may notify the user of one or more tasks that are located before the target task in the task queue and that are used as candidate tasks, for example, a task 1 to a task 3 that are located before the target task, and the user manually selects whether to close one or more of the tasks. Therefore, when the terminal obtains a candidate task selected by the user, the terminal may delete, from the task queue, the candidate task selected by the user. In this way, the terminal does not need to execute the deleted candidate task, so that the target task corresponding to the trigger operation can move to the queue head of the task queue as soon as possible, thereby increasing a processing speed of the target task, and avoiding a case in which frame freezing occurs again in a same application scenario.

Alternatively, when detecting again that the user performs the same trigger operation for the target application, the terminal may automatically delete one or more tasks that are located before the target task in the task queue, to increase a processing speed of the target task in the task queue.

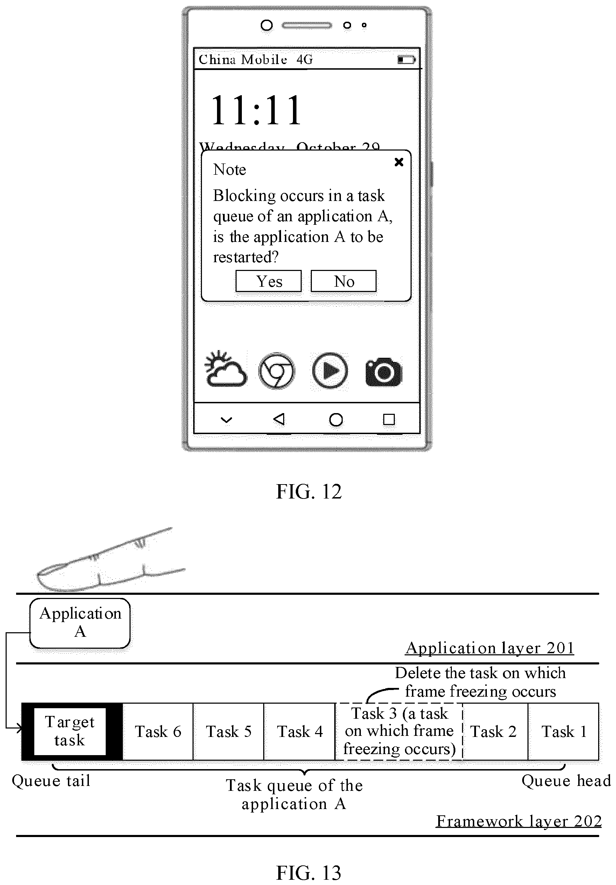

Alternatively, when detecting again that the user performs the same trigger operation for the target application, as shown in FIG. 12, if the terminal detects that the duration in which the target task waits in the task queue is greater than the first reference value, and execution of the target task is not started, the terminal may prompt the user to close the application and restart the application. This is not limited in this embodiment of this application.

Certainly, if the terminal detects that the duration in which the target task waits in the task queue is greater than the first reference value, and execution of the target task is not started, the terminal may also prompt the user to close an application other than the target application, to release current memory resources of the terminal. The terminal may accelerate execution of each task in the task queue by using the released memory resources, thereby increasing a processing speed of the target task in the task queue.

In some other embodiments of this application, because the terminal determines, in step 405a, that the frame freezing occurs when another task that is located before the target task in the task queue is being executed, and the terminal can monitor duration of executing each task in the task queue, the terminal may determine, based on duration of executing each task that is located before the target task in the task queue, one or more tasks on which frame freezing occurs, that are located before the target task in the task queue, and that run slowly.

For example, as shown in FIG. 7(a), in addition to monitoring the first duration from the time at which the target task enters the task queue to the time at which the target task moves to the queue head of the task queue, the terminal may further monitor duration of executing each task in the task 1 to the task 6 in the task queue. When duration of executing a task (for example, the task 3) is greater than the second reference value, it indicates that the terminal runs slowly when executing the task 3. Consequently, frame freezing occurs when the terminal runs the target task. Therefore, the task 3 may be used as one of the tasks on which frame freezing occurs.

In this case, when that the user performs the same trigger operation for the target application is detected again, to avoid a case in which frame freezing occurs again in a same application scenario, as shown in FIG. 13, the terminal may automatically delete a task on which frame freezing occurs (for example, the task 3) in the task queue. In this way, a processing speed of the target task in the task queue is increased. Alternatively, when executing a task on which frame freezing occurs in the task queue, the terminal may allocate more running resources to the task on which frame freezing occurs, for example, increasing CPU running frequency and increasing memory resources for processing the task on which frame freezing occurs. In this way, the terminal may more rapidly execute the task on which frame freezing occurs and that is located before the target task. Therefore, a processing speed of the target task in the task queue is increased.

405b. When the second duration is greater than the second reference value, the terminal determines that the location in which the frame freezing occurs is in a process of executing the target task.

For example, the second duration is C3-C2=26 milliseconds, and the second reference value, of the target task, that is present by the server to the terminal is 20 milliseconds. In this case, the second duration is greater than the second reference value, and it indicates that the terminal executes the target task for a long time. Consequently, the trigger operation performed by the user for the target application is not responded for a long time.

In this case, the terminal may determine that the frame freezing occurs because the target task is executed for a long time, so that the terminal can accurately determine a specific reason of frame freezing during running of the target application.

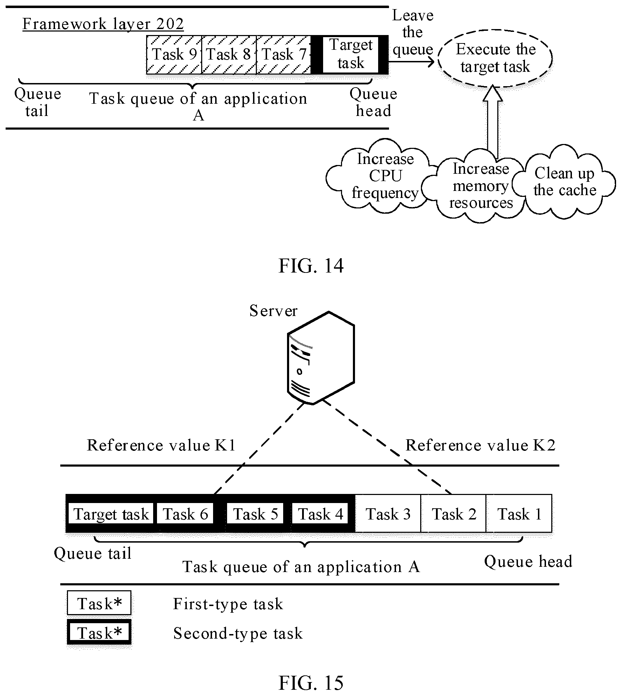

In this case, to avoid a case in which frame freezing occurs again when the user subsequently performs a trigger operation for the target application again, when detecting again that the user performs the same trigger operation for the target application, the terminal sends a target task generated for the target application to the queue tail of the task queue of the target application. When the target task moves to the queue head of the task queue, the terminal starts to execute the target task. In this case, as shown in FIG. 14, the terminal may allocate more running resources to the target task when executing the target task, for example, increasing CPU running frequency, and increasing memory resources for processing the task on which frame freezing occurs, to increase a processing speed of the target task in the task queue, and avoid a case in which frame freezing occurs again in a same application scenario.

In addition, in this embodiment of this application, as shown in FIG. 15, the terminal may further divide tasks in the task queue based on a task type. For example, a display-type task (for example, a task 1 to a task 3) may be used as a first-type task, and a search-type task (for example, a task 4 to a task 6 and a current target task) is used as a second-type task. Because different times are used by the terminal to execute different types of tasks, the second reference value sent by the server may specifically include two reference values K1 and K2, where K1 may be used to indicate a median value of times used by the terminal to execute the display-type tasks, for example, 15 milliseconds, and K2 may be used to indicate a median value of times used by the terminal to execute the search-type tasks, for example, 10 milliseconds.

In this way, when executing the target task, the terminal may compare, with a corresponding second reference value based on a type to which the target task belongs, second duration of actually executing the target task, to more accurately determine whether frame freezing occurs during execution of the target task.

For example, the target task shown in FIG. 15 is a search-type task, and the second reference value K2 of the search-type task is 10 milliseconds. After obtaining second duration (C3-C2) in which the target task is executed, the terminal may compare the second duration with 10 milliseconds. When the second duration is greater than 10 milliseconds, it may be determined that the frame freezing occurs during execution of the target task, thereby improving accuracy of detecting frame freezing by the terminal.

Certainly, when reporting the first duration and the second duration to the server, the terminal may further report an identifier of the type to which the target task belongs. For example, an identifier 0 represents the first-type task, and an identifier 1 represents the second-type task. In this way, the server may also update the values of K1 and K2 in the second reference value based on duration in which different types of tasks are executed by different terminals and that are reported by the terminals, and send the updated values of K1 and K2 to the terminals, so that the terminals obtain a more accurate reference value used when frame freezing is detected for different types of tasks, thereby improving accuracy of detecting frame freezing by the terminal.

In addition, an embodiment of this application further provides a graphical user interface (GUI) displayed on a touchscreen of a terminal. For example, the graphical user interface includes:
displaying a first GUI on the touchscreen of the terminal, where the first GUI may be a desktop (launch) interface of the terminal or any interface displayed when an application runs, and this is not limited in this embodiment of this application; further, when detecting a first gesture triggered by a user for a target application on the touchscreen, for example, a gesture of tapping an icon of the target application, displaying, by the terminal, a second GUI on the touchscreen in response to the gesture, where the second GUI includes a first interface element used to notify the user of a location in which frame freezing occurs, for example, the first interface element may be a notification box shown in FIG. 8(b).

Alternatively, as shown in FIG. 8(a), the second GUI may further include a second interface element used to indicate processing progress of frame freezing.

Alternatively, as shown in FIG. 8(c), the second GUI may further include a third interface element used to prompt to perform frame freezing optimization. This is not limited in this embodiment of this application.

It may be understood that, to implement the foregoing functions, the terminal includes corresponding hardware structures and/or software modules for performing the functions. A person skilled in the art should be easily aware that, in combination with the examples of units and algorithms steps described in the embodiments disclosed in this specification, the embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

In the embodiments of this application, the terminal may be divided into function modules based on the foregoing method examples. For example, the function modules may be obtained through division based on corresponding functions, or two or more functions may be integrated into one processing module. The integrated module may be implemented in a form of hardware, or may be implemented in a form of a software function module. It should be noted that module division in the embodiments of this application is an example, and is merely logical function division. There may be another division manner in an actual implementation.

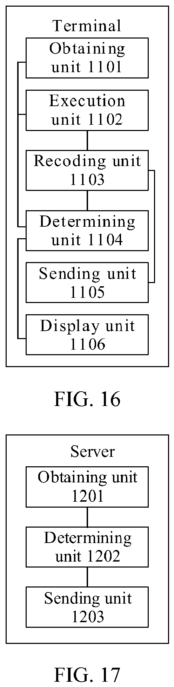

When function modules are obtained through division based on corresponding functions, FIG. 16 is a possible schematic structural diagram of a terminal according to the foregoing embodiments. The terminal includes an obtaining unit 1101, an execution unit 1102, a recording unit 1103, a determining unit 1104, a sending unit 1105, and a display unit 1106.

The obtaining unit 1101 is configured to support the terminal executing a process 400 in FIG. 4. The execution unit 1102 is configured to support the terminal executing a process 401 in FIG. 4. The recording unit 1103 is configured to support the terminal executing processes 402 and 403 in FIG. 4. The determining unit 1104 is configured to support the terminal executing processes 405a and 405b in FIG. 4. The sending unit 1105 is configured to support the terminal executing a process 404 in FIG. 4. The display unit 1106 is configured to notify, in a display interface, a user that a location in which frame freezing occurs is in a process of another task before the target task is executed or is located in a process of executing the target task. All related content of steps in the foregoing method embodiments may be cited in corresponding function descriptions in summary. Details are not described herein again.

Correspondingly, when function modules are obtained through division based on corresponding functions, FIG. 17 is a possible schematic structural diagram of a server according to the foregoing embodiments. The server includes an obtaining unit 1201, a determining unit 1202, and a sending unit 1203.

The obtaining unit 1201 is configured to obtain first duration and second duration that are sent by a first terminal. The first duration is used to indicate duration from a time at which the first terminal generates a target task to a time at which the first terminal starts to execute the target task, the second duration is used to indicate duration of executing the target task by the first terminal, and the target task is generated in response to a trigger operation for a target application.

The determining unit 1202 is configured to: determine, based on the first duration, a first reference value of waiting to execute the target task; and determine, based on the second duration, a second reference value of executing the target task.

Further, the obtaining unit 1201 is further configured to obtain third duration and fourth duration that are sent by a second terminal. The third duration is used to indicate duration from a time at which the second terminal generates a target task to a time at which the second terminal starts to execute the target task, the fourth duration is used to indicate duration of executing the target task by the second terminal, and the target task is generated in response to a trigger operation for the target application.

The determining unit 1202 is further configured to: update the first reference value based on the third duration, and update the second reference value based on the fourth duration.

Further, the sending unit 1203 is configured to send the first reference value and the second reference value to the first terminal.

Further, the obtaining unit 1201 is further configured to obtain fifth duration and sixth duration that are sent by the first terminal. The fifth duration is used to indicate duration from a time at which the first terminal regenerates a target task to a time at which the first terminal starts to execute the target task, the second duration is used to indicate duration of re-executing the target task by the first terminal, and the target task is generated in response to a trigger operation for the target application.

The determining unit 1202 is further configured to: update the first reference value based on the fifth duration, and update the second reference value based on the sixth duration.

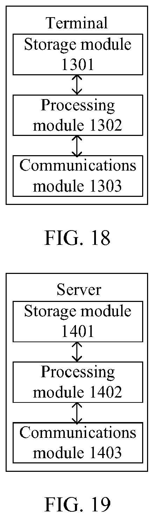

When an integrated unit is used, FIG. 18 is a possible schematic structural diagram of a terminal according to the foregoing embodiments. The terminal includes a processing module 1302 and a communications module 1303. The processing module 1302 is configured to control and manage an action of the terminal. The communications module 1303 is configured to support the terminal in communicating with another network entity. The terminal may further include a storage module 1301, configured to store program code and data of the terminal.

Similarly, when an integrated unit is used, FIG. 19 is a possible schematic structural diagram of a server according to the foregoing embodiments. The server includes a processing module 1402 and a communications module 1403. The processing module 1402 is configured to control and manage an action of the server. The communications module 1403 is configured to support the server in communicating with another network entity. The server may further include a storage module 1401, configured to store program code and data of the server.

The processing module 1302/1402 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module 1302/1402 may implement or execute various example logical blocks, modules, and circuits described with reference to content disclosed in this application. Alternatively, the processor may be a combination for implementing a computing function, for example, a combination including one or more microprocessors or a combination of a DSP and a microprocessor. The communications module 1303/1403 may be a transceiver, a transceiver circuit, a communications interface, or the like. The storage module 1301/1401 may be a memory.

When the processing module 1302 is a processor, the communications module 1303 is an RF transceiver circuit, and the storage module 1301 is a memory, the terminal provided in the embodiments of this application may be the mobile phone 100 shown in FIG. 1.

All or some of the foregoing embodiments may be implemented through software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions described in the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A frame freezing detection method, comprising:
when detecting a trigger operation for a target application, performing (401), by a terminal (52,100) a target task corresponding to the trigger operation;
recording (402, 403), by the terminal, a first duration from generating the target task to starting to execute the target task, and a second duration of executing the target task; and
determining (405a, 405b), by the terminal by comparing the first duration with a preset first reference value and comparing the second duration with a preset second reference value, said first and second reference values being obtained from a server, that a location in which the frame freezing occurs is in a process of another task before the target task is executed or is in a process of executing the target task;
wherein the determining comprises
when the first duration is greater than the first reference value, determining (405a), by the terminal (52, 100), that the location in which the frame freezing occurs is in the process of another task before the target task is executed; and
when the second duration is greater than the second reference value, determining (405b), by the terminal (52, 100), that the location in which the frame freezing occurs is in the process of executing the target task.

2. The method according to claim 1, wherein after the determining, by the terminal (52, 100), that the location in which the frame freezing occurs is in the process of another task before the target task is executed, the method further comprises:
when detecting a trigger operation for the target application again, performing, by the terminal (52, 100), offload processing on at least one task that is located before a current target task and that is used as a sub-thread.

3. The method according to claim 1, wherein after the determining, by the terminal (52, 100), that the location in which the frame freezing occurs is in the process of another task before the target task is executed, the method further comprises:
when detecting a trigger operation for the target application again, using, by the terminal (52, 100) as a candidate target task that waits to be closed, at least one task that is located before a current target task; and
when obtaining a candidate target task selected by a user, deleting, by the terminal (52, 100), the candidate target task selected by the user.

4. The method according to claim 1, wherein after the determining, by the terminal (52, 100), that the location in which the frame freezing occurs is in the process of another task before the target task is executed, the method further comprises:
when detecting a trigger operation again that is performed by a user for the target application, deleting, by the terminal (52, 100), all tasks generated for the current target application, and restarting the target application.

5. The method according to any one of claims 1 to 4, wherein after the determining, by the terminal (52, 100), that the location in which the frame freezing occurs is in the process of executing the target task, the method further comprises:
when detecting a trigger operation for the target application again, adding, by the terminal (52, 100), a running resource for executing the target task.

6. The method according to any one of claims 1 to 5, wherein after the recording, by the terminal (52, 100), first duration from generating the target task to starting to execute the target task, and second duration of executing the target task, the method further comprises:
sending, by the terminal (52, 100), the first duration and the second duration to a server (51).

7. The method according to any one of claims 1 to 6, wherein the method further comprises:
obtaining, by the terminal (52, 100), the first reference value and the second reference value from the server (51), wherein the first reference value is used to indicate a median value of duration in which the target task waits to be executed, and the second reference value is used to indicate a median value of duration of executing the target task.

8. The method according to any one of claims 1 to 7, wherein after the determining that a location in which frame freezing occurs is in a process of another task before the target task is executed or is in a process of executing the target task, the method further comprises:
notifying, by the terminal (52, 100) in a display interface, the user that the location in which the frame freezing occurs is in the process of another task before the target task is executed or is in the process of executing the target task.

9. A frame freezing detection method, comprising:
obtaining, by a server (51), a first duration and a second duration that are sent by a first terminal (52, 100), wherein the first duration is used to indicate duration from a time at which the first terminal (52, 100) generates a target task to a time at which the first terminal (52, 100) starts to execute the target task, the second duration is used to indicate duration of executing the target task by the first terminal (52, 100), and the target task is generated in response to a trigger operation for a target application;
determining, by the server (51) based on the first duration, a first reference value of waiting to execute the target task;
determining, by the server (51) based on the second duration, a second reference value of executing the target task; and
sending, by the server (51), the first reference value and the second reference value to the first terminal in order to perform the frame freezing detection according to claim 1.

10. The method according to claim 9, wherein the method further comprises:
obtaining, by the server (51), a third duration and a fourth duration that are sent by a second terminal (52, 100), wherein the third duration is used to indicate a duration from a time at which the terminal (52, 100) generates a target task to a time at which the terminal (52, 100) starts to execute the target task, the fourth duration is used to indicate duration of executing the target task by the terminal (52, 100), and the target task is generated in response to a trigger operation for the target application;
updating, by the server (51), the first reference value based on the third duration; and
updating, by the server (51), the second reference value based on the fourth duration.

11. The method according to claim 10, wherein after the sending, by the server (51), the first reference value and the second reference value to the first terminal, the method further comprises:
obtaining, by the server (51), a fifth duration and a sixth duration that are sent by the first terminal, wherein the fifth duration is used to indicate duration from a time at which the first terminal regenerates a target task to a time at which the first terminal starts to execute the target task, the second duration is used to indicate duration of re-executing the target task by the first terminal, and the target task is generated in response to a trigger operation for the target application;
updating, by the server (51), the first reference value based on the fifth duration; and
updating, by the server (51), the second reference value based on the sixth duration.

12. A terminal (52, 100), comprising: an input device, a processor (101), a display (1106), and a communications interface (110) that are connected by using a bus, wherein
the input device is configured to detect a trigger operation for a target application; and
the processor (101) is configured to: execute a target task corresponding to the trigger operation; record first duration from generating the target task to starting to execute the target task, and second duration of executing the target task; and determine, by comparing the first duration with a preset first reference value and comparing the second duration with a preset second reference value, said first and second reference values being obtained from a server, that a location in which frame freezing occurs is in a process of another task before the target task is executed or is in a process of executing the target task;
wherein the processor (101) is specifically configured to: when the first duration is greater than the first reference value, determine that the location in which the frame freezing occurs is in the process of another task before the target task is executed; and when the second duration is greater than the second reference value, determine that the location in which the frame freezing occurs is in the process of executing the target task.

## Patentansprüche

1. Verfahren zur Erkennung von Frame-Einfrieren, umfassend:
beim Erkennen einer Auslöseoperation für eine Zielanwendung, Durchführen (401), durch ein Endgerät (52, 100), einer der Auslöseoperation entsprechenden Zielaufgabe; Aufzeichnen (402, 403), durch das Endgerät, einer ersten Dauer vom Erzeugen der Zielaufgabe bis zum Beginn der Ausführung der Zielaufgabe und einer zweiten Dauer der Ausführung der Zielaufgabe; und
Bestimmen (405a, 405b), durch das Endgerät durch Vergleichen der ersten Dauer mit einem voreingestellten ersten Referenzwert und Vergleichen der zweiten Dauer mit einem voreingestellten zweiten Referenzwert, wobei der erste und der zweite Referenzwert von einem Server erhalten werden, dass eine Stelle, an der das Frame-Einfrieren auftritt, sich in einem Prozess einer anderen Aufgabe vor der Ausführung der Zielaufgabe befindet oder sich in einem Prozess der Ausführung der Zielaufgabe befindet;
wobei das Bestimmen umfasst:
wenn die erste Dauer größer als der erste Referenzwert ist, Bestimmen (405a), durch das Endgerät (52, 100), dass die Stelle, an der das Frame-Einfrieren auftritt, sich im Prozess einer anderen Aufgabe vor der Ausführung der Zielaufgabe befindet; und wenn die zweite Dauer größer als der zweite Referenzwert ist, Bestimmen (405b), durch das Endgerät (52, 100), dass die Stelle, an der das Frame-Einfrieren auftritt, im Prozess der Ausführung der Zielaufgabe ist.

2. Verfahren nach Anspruch 1, wobei das Verfahren nach dem Bestimmen, durch das Endgerät (52, 100), dass die Stelle, an der das Frame-Einfrieren auftritt, sich im Prozess einer anderen Aufgabe vor der Ausführung der Zielaufgabe befindet, ferner umfasst:
beim erneuten Erkennen einer Auslöseoperation für die Zielanwendung, Durchführen, durch das Endgerät (52, 100), von Offload-Verarbeitung an mindestens einer Aufgabe, die sich vor einer aktuellen Zielaufgabe befindet und die als Unter-Thread verwendet wird.

3. Verfahren nach Anspruch 1, wobei das Verfahren nach dem Bestimmen, durch das Endgerät (52, 100), dass die Stelle, an der das Frame-Einfrieren auftritt, sich im Prozess einer anderen Aufgabe vor der Ausführung der Zielaufgabe befindet, ferner umfasst:
beim erneuten Erkennen einer Auslöseoperation für die Zielanwendung, Verwenden, durch das Endgerät (52, 100) als eine in Frage kommende Zielaufgabe, die darauf wartet, geschlossen zu werden, von mindestens einer Aufgabe, die sich vor einer aktuellen Zielaufgabe befindet; und
beim Erhalten einer von einem Benutzer ausgewählten in Frage kommenden Zielaufgabe, Löschen, durch das Endgerät (52, 100), der vom Benutzer ausgewählten in Frage kommenden Zielaufgabe.

4. Verfahren nach Anspruch 1, wobei das Verfahren nach dem Bestimmen, durch das Endgerät (52, 100), dass die Stelle, an der das Frame-Einfrieren auftritt, sich im Prozess einer anderen Aufgabe vor der Ausführung der Zielaufgabe befindet, ferner umfasst:
beim erneuten Erkennen einer Auslöseoperation, die von einem Benutzer für die Zielanwendung ausgeführt wird, Löschen, durch das Endgerät (52, 100), aller für die aktuelle Zielanwendung erzeugten Aufgaben und Neustarten der Zielanwendung.

5. Verfahren nach einem der Ansprüche 1 bis 4, wobei das Verfahren nach dem Bestimmen, durch das Endgerät (52, 100), dass die Stelle, an der das Frame-Einfrieren auftritt, im Prozess der Ausführung der Zielaufgabe ist, ferner umfasst:
beim erneuten Erkennen einer Auslöseoperation für die Zielanwendung, Hinzufügen, durch das Endgerät (52, 100), einer aktiven Ressource zur Ausführung der Zielaufgabe.

6. Verfahren nach einem der Ansprüche 1 bis 5, wobei das Verfahren nach dem Aufzeichnen, durch das Endgerät (52, 100), der ersten Dauer vom Erzeugen der Zielaufgabe bis zum Beginn der Ausführung der Zielaufgabe und der zweiten Dauer der Ausführung der Zielaufgabe ferner umfasst:
Senden, durch das Endgerät (52, 100), der ersten Dauer und der zweiten Dauer an einen Server (51).

7. Verfahren nach einem der Ansprüche 1 bis 6, wobei das Verfahren ferner umfasst:
Erhalten, durch das Endgerät (52, 100), des ersten Referenzwertes und des zweiten Referenzwertes vom Server (51), wobei der erste Referenzwert dazu verwendet wird, einen Medianwert der Dauer anzuzeigen, in der die Zielaufgabe auf ihre Ausführung wartet, und der zweite Referenzwert dazu verwendet wird, einen Medianwert der Dauer der Ausführung der Zielaufgabe anzuzeigen.

8. Verfahren nach einem der Ansprüche 1 bis 7, wobei das Verfahren nach dem Bestimmen, dass eine Stelle, an der Frame-Einfrieren auftritt, sich in einem Prozess einer anderen Aufgabe vor der Ausführung der Zielaufgabe befindet, oder sich in einem Prozess der Ausführung der Zielaufgabe befindet, ferner umfasst:
Benachrichtigen, durch das Endgerät (52, 100) in einer Anzeigeschnittstelle, des Benutzers, dass die Stelle, an der das Frame-Einfrieren auftritt, sich im Prozess einer anderen Aufgabe vor der Ausführung der Zielaufgabe befindet oder sich im Prozess der Ausführung der Zielaufgabe befindet.

9. Verfahren zur Erkennung von Frame-Einfrieren, umfassend:
Erhalten, durch einen Server (51), einer ersten Dauer und einer zweiten Dauer, die von einem ersten Endgerät (52, 100) gesendet werden, wobei die erste Dauer dazu verwendet wird, die Dauer von einem Zeitpunkt, zu dem das erste Endgerät (52, 100) eine Zielaufgabe erzeugt, bis zu einem Zeitpunkt, zu dem das erste Endgerät (52, 100) mit der Ausführung der Zielaufgabe beginnt, anzuzeigen, die zweite Dauer dazu verwendet wird, die Dauer der Ausführung der Zielaufgabe durch das erste Endgerät (52, 100) anzuzeigen, und die Zielaufgabe als Reaktion auf eine Auslöseoperation für eine Zielanwendung erzeugt wird;
Bestimmen, durch den Server (51), auf der Grundlage der ersten Dauer, eines ersten Referenzwertes des Wartens auf die Ausführung der Zielaufgabe;
Bestimmen, durch den Server (51), auf der Grundlage der zweiten Dauer, eines zweiten Referenzwertes der Ausführung der Zielaufgabe; und
Senden, durch den Server (51), des ersten Referenzwertes und des zweiten Referenzwertes an das erste Endgerät zum Durchführen der Erkennung von Frame-Einfrieren nach Anspruch 1.

10. Verfahren nach Anspruch 9, wobei das Verfahren ferner umfasst:
Erhalten, durch den Server (51), einer dritten Dauer und einer vierten Dauer, die von einem zweiten Endgerät (52, 100) gesendet werden, wobei die dritte Dauer dazu verwendet wird, eine Dauer von einer Zeit, zu der das Endgerät (52, 100) eine Zielaufgabe erzeugt, bis zu einer Zeit, zu der das Endgerät (52, 100) beginnt, die Zielaufgabe auszuführen, anzuzeigen, die vierte Dauer dazu verwendet wird, die Dauer der Ausführung der Zielaufgabe durch das Endgerät (52, 100) anzuzeigen, und die Zielaufgabe als Reaktion auf eine Auslöseoperation für die Zielanwendung erzeugt wird;
Aktualisieren, durch den Server (51), des ersten Referenzwertes auf der Grundlage der dritten Dauer; und
Aktualisieren, durch den Server (51), des zweiten Referenzwertes auf der Grundlage der vierten Dauer.

11. Verfahren nach Anspruch 10, wobei das Verfahren nach dem Senden, durch den Server (51), des ersten Referenzwertes und des zweiten Referenzwertes an das erste Endgerät ferner umfasst:
Erhalten, durch den Server (51), einer fünften Dauer und einer sechsten Dauer, die vom ersten Endgerät gesendet werden, wobei die fünfte Dauer dazu verwendet wird, die Dauer von einem Zeitpunkt, zu dem das erste Endgerät eine Zielaufgabe neu erzeugt, bis zu einem Zeitpunkt, zu dem das erste Endgerät mit der Ausführung der Zielaufgabe beginnt, anzuzeigen, die zweite Dauer dazu verwendet wird, die Dauer der erneuten Ausführung der Zielaufgabe durch das erste Endgerät anzuzeigen, und die Zielaufgabe als Reaktion auf eine Auslöseoperation für die Zielanwendung erzeugt wird;
Aktualisieren, durch den Server (51), des ersten Referenzwertes auf der Grundlage der fünften Dauer; und
Aktualisieren, durch den Server (51), des zweiten Referenzwertes auf der Grundlage der sechsten Dauer.

12. Endgerät (52, 100), umfassend: eine Eingabevorrichtung, einen Prozessor (101), eine Anzeige (1106) und eine Kommunikationsschnittstelle (110), die unter Verwendung eines Busses verbunden sind, wobei
die Eingabevorrichtung dafür ausgelegt ist, eine Auslöseoperation für eine Zielanwendung zu erkennen; und
der Prozessor (101) für folgende Vorgänge ausgelegt ist: Ausführen einer Zielaufgabe entsprechend der Auslöseoperation; Aufzeichnen einer ersten Dauer vom Erzeugen der Zielaufgabe bis zum Beginn der Ausführung der Zielaufgabe und einer zweiten Dauer der Ausführung der Zielaufgabe; und Bestimmen, durch Vergleichen der ersten Dauer mit einem voreingestellten ersten Referenzwert und Vergleichen der zweiten Dauer mit einem voreingestellten zweiten Referenzwert, wobei der erste und der zweite Referenzwert von einem Server erhalten werden,
dass eine Stelle, an dem Frame-Einfrieren auftritt, sich in einem Prozess einer anderen Aufgabe vor der Ausführung der Zielaufgabe befindet oder sich in einem Prozess der Ausführung der Zielaufgabe befindet;
wobei der Prozessor (101) spezifisch für folgende Vorgänge ausgelegt ist: wenn die erste Dauer größer als der erste Referenzwert ist, Bestimmen, dass die Stelle, an der das Frame-Einfrieren auftritt, sich im Prozess einer anderen Aufgabe vor der Ausführung der Zielaufgabe befindet; und wenn die zweite Dauer größer als der zweite Referenzwert ist, Bestimmen, dass die Stelle, an der das Frame-Einfrieren auftritt, sich im Prozess der Ausführung der Zielaufgabe befindet.

## Revendications

1. Procédé de détection de saccades, comprenant :
lors de la détection d'une opération de lancement pour une application cible, la réalisation (401), par un terminal (52, 100), d'une tâche cible correspondant à l'opération de lancement ;
l'enregistrement (402, 403), par le terminal, d'une première durée depuis la génération de la tâche cible jusqu'au début de l'exécution de la tâche cible, et d'une deuxième durée d'exécution de la tâche cible ; et
la détermination (405a, 405b), par le terminal en comparant la première durée avec une première valeur de référence prédéfinie et en comparant la deuxième durée avec une seconde valeur de référence prédéfinie, lesdites première et seconde valeurs de référence étant obtenues d'un serveur, qu'un emplacement dans lequel se produisent les saccades est dans un processus d'une autre tâche avant que la tâche cible soit exécutée ou est dans un processus d'exécution de la tâche cible ;
dans lequel la détermination comprend
quand la première durée est supérieure à la première valeur de référence, la détermination (405a), par le terminal (52, 100), que l'emplacement dans lequel se produisent les saccades est dans le processus d'une autre tâche avant que la tâche cible soit exécutée ; et
quand la deuxième durée est supérieure à la seconde valeur de référence, la détermination (405b), par le terminal (52, 100), que l'emplacement dans lequel se produisent les saccades est dans le processus d'exécution de la tâche cible.

2. Procédé selon la revendication 1, après la détermination, par le terminal (52, 100), que l'emplacement dans lequel se produisent les saccades est dans le processus d'une autre tâche avant que la tâche cible soit exécutée, le procédé comprenant en outre :
lors de la détection à nouveau d'une opération de lancement pour l'application cible, la réalisation, par le terminal (52, 100), d'un traitement de transfert sur au moins une tâche qui est située avant une tâche cible en cours et qui est utilisée comme fil d'exécution secondaire.

3. Procédé selon la revendication 1, après la détermination, par le terminal (52, 100), que l'emplacement dans lequel se produisent les saccades est dans le processus d'une autre tâche avant que la tâche cible soit exécutée, le procédé comprenant en outre :
lors de la détection à nouveau d'une opération de lancement pour l'application cible, l'utilisation, par le terminal (52, 100) en tant que tâche cible candidate qui attend d'être fermée, d'au moins une tâche qui est située avant une tâche cible en cours ; et
lors de l'obtention d'une tâche cible candidate sélectionnée par un utilisateur, la suppression, par le terminal (52, 100), de la tâche cible candidate sélectionnée par l'utilisateur.

4. Procédé selon la revendication 1, après la détermination, par le terminal (52, 100), que l'emplacement dans lequel se produisent les saccades est dans le processus d'une autre tâche avant que la tâche cible soit exécutée, le procédé comprenant en outre :
lors de la détection à nouveau d'une opération de lancement qui est réalisée par un utilisateur pour l'application cible, la suppression, par le terminal (52, 100), de toutes les tâches générées pour l'application cible en cours, et le redémarrage de l'application cible.

5. Procédé selon l'une quelconque des revendications 1 à 4, après la détermination, par le terminal (52, 100), que l'emplacement dans lequel se produisent les saccades est dans le processus d'exécution de la tâche cible, le procédé comprenant en outre :
lors de la détection à nouveau d'une opération de lancement pour l'application cible, l'ajout, par le terminal (52, 100), d'une ressource d'exploitation pour exécuter la tâche cible.

6. Procédé selon l'une quelconque des revendications 1 à 5, après l'enregistrement, par le terminal (52, 100), d'une première durée depuis la génération de la tâche cible jusqu'au début de l'exécution de la tâche cible, et d'une deuxième durée d'exécution de la tâche cible, le procédé comprenant en outre :
l'envoi, par le terminal (52, 100), de la première durée et de la deuxième durée à un serveur (51).

7. Procédé selon l'une quelconque des revendications 1 à 6, le procédé comprenant en outre :
l'obtention, par le terminal (52, 100), de la première valeur de référence et de la seconde valeur de référence du serveur (51), la première valeur de référence étant utilisée pour indiquer une valeur médiane de durée dans laquelle la tâche attend d'être exécutée, et la seconde valeur de référence étant utilisée pour indiquer une valeur médiane de durée d'exécution de la tâche cible.

8. Procédé selon l'une quelconque des revendications 1 à 7, après la détermination qu'un emplacement dans lequel se produisent les saccades est dans un processus d'une autre tâche avant que la tâche cible soit exécutée ou est dans un processus d'exécution de la tâche cible, le procédé comprenant en outre :
la notification, par le terminal (52, 100) dans une interface d'affichage, à l'utilisateur que l'emplacement dans lequel se produisent les saccades est dans le processus d'une autre tâche avant que la tâche cible soit exécutée ou est dans le processus d'exécution de la tâche cible.

9. Procédé de détection de saccades, comprenant :
l'obtention, par un serveur (51), d'une première durée et d'une deuxième durée qui sont envoyées par un premier terminal (52, 100), la première durée étant utilisée pour indiquer une durée depuis un moment auquel le premier terminal (52, 100) génère une tâche cible jusqu'à un moment auquel le premier terminal (52, 100) commence à exécuter la tâche cible, la deuxième durée étant utilisée pour indiquer une durée d'exécution de la tâche cible par le premier terminal (52, 100), et la tâche cible étant générée en réponse à une opération de lancement pour une application cible ;
la détermination, par le serveur (51) sur la base de la première durée, d'une première valeur de référence d'attente pour exécuter la tâche cible ;
la détermination, par le serveur (51) sur la base de la deuxième durée, d'une seconde valeur de référence d'exécution de la tâche cible ; et
l'envoi, par le serveur (51), de la première valeur de référence et de la seconde valeur de référence au premier terminal dans le but de réaliser la détection de saccades selon la revendication 1.

10. Procédé selon la revendication 9, le procédé comprenant en outre :
l'obtention, par le serveur (51), d'une troisième durée et d'une quatrième durée qui sont envoyées par un second terminal (52, 100), la troisième durée étant utilisée pour indiquer une durée depuis un moment auquel le terminal (52, 100) génère une tâche cible jusqu'à un moment auquel le terminal (52, 100) commence à exécuter la tâche cible, la quatrième durée étant utilisée pour indiquer une durée d'exécution de la tâche cible par le terminal (52, 100), et la tâche cible étant générée en réponse à une opération de lancement pour l'application cible ;
la mise à jour, par le serveur (51), de la première valeur de référence sur la base de la troisième durée ; et
la mise à jour, par le serveur (51), de la seconde valeur de référence sur la base de la quatrième durée.

11. Procédé selon la revendication 10, après l'envoi, par le serveur (51), de la première valeur de référence et de la seconde valeur de référence au premier terminal, le procédé comprenant en outre :
l'obtention, par le serveur (51), d'une cinquième durée et d'une sixième durée qui sont envoyées par le premier terminal, la cinquième durée étant utilisée pour indiquer une durée depuis un moment auquel le premier terminal régénère une tâche cible jusqu'à un moment auquel le premier terminal commence à exécuter la tâche cible, la deuxième durée étant utilisée pour indiquer une durée de réexécution de la tâche cible par le premier terminal, et la tâche cible étant générée en réponse à une opération de lancement pour l'application cible ;
la mise à jour, par le serveur (51), de la première valeur de référence sur la base de la cinquième durée ; et
la mise à jour, par le serveur (51), de la seconde valeur de référence sur la base de la sixième durée.

12. Terminal (52, 100), comprenant: un dispositif d'entrée, un processeur (101), un affichage (1106) et une interface de communication (110) qui sont connectés au moyen d'un bus, dans lequel
le dispositif d'entrée est configuré pour détecter une opération de lancement pour une application cible ; et
le processeur (101) est configuré pour: exécuter une tâche cible correspondant à l'opération de lancement ; enregistrer une première durée depuis la génération de la tâche cible jusqu'au début de l'exécution de la tâche cible, et une deuxième durée d'exécution de la tâche cible ; et déterminer, en comparant la première durée avec une première valeur de référence prédéfinie et en comparant la deuxième durée avec une seconde valeur de référence prédéfinie, lesdites première et seconde valeurs de référence étant obtenues d'un serveur, qu'un emplacement dans lequel se produisent les saccades est dans un processus d'une autre tâche avant que la tâche cible soit exécutée ou est dans un processus d'exécution de la tâche cible ;
dans lequel le processeur (101) est spécifiquement configuré pour : quand la première durée est supérieure à la première valeur de référence, déterminer que l'emplacement dans lequel se produisent les saccades est dans le processus d'une autre tâche avant que la tâche cible soit exécutée ; et quand la deuxième durée est supérieure à la seconde valeur de référence, déterminer que l'emplacement dans lequel se produisent les saccades est dans le processus d'exécution de la tâche cible.
